# EUROPEAN PATENT APPLICATION

(11) **EP 4 105 112 A1**
(43) Date of publication of application: **21.12.2022**
(21) Application number: 21753658.0
(22) Date of filing: 12.02.2021
(51) Int. Cl.: B62M 6/45, B62M 6/55

(54) **VEHICLE HOOD**

(30) Priority: 14.02.2020 JP 2020023840
(71) Applicant: Honda Motor Co., Ltd., Minato-ku Tokyo 107-8556 (JP)
(72) Inventor: TSUKAMOTO Kenji, Wako-shi, Saitama 351-0193 (JP)
(74) Representative: Weickmann & Weickmann PartmbB
(86) International application number: PCT/JP2021/005188
(87) International publication number: WO 2021/162075

(57) **Abstract**

Provided is an electric power-assist device which can be used to retrofit and convert an existing bicycle to a power assisted bicycle with ease, and enables proper power assist control in response to the pedaling force, without major modifications to the bicycle. The device comprises an electric motor 58 connected to a crankshaft 24 or a crankarm 28 of a bicycle 10; a rotational angle sensor 130 for detecting a crank rotational angle of the crankshaft; an acceleration sensor 134 for detecting an acceleration level in a traveling direction of the bicycle; and a control unit 150 for controlling the electric motor 58, wherein the control unit comprises: a pedaling force estimator 152 for estimating a pedaling force based on an acceleration level measured at a predetermined crank rotational angle; and a motor drive controller 158 for controlling the electric motor 58 based on the estimated pedaling force.

## Description

### TECHNICAL FIELD

The present invention relates to an electric power assist device for bicycles, and a bicycle. In particular, the present invention relates to a control system for controlling an electric motor for generating an assist power.

### BACKGROUND ART

Known power assisted bicycles include those configured to measure the distortion of a pedal system by using a strain gauge, calculate a pedaling force based on the measured distortion value, and control an electric motor based on the calculated pedaling force (See Patent Document 1), and those configured to detect a pedaling force by using a pedaling force sensor, the sensor including a pedaling force transmitting sleeve attached to a crankshaft driven by the pedal, and control an electric motor based on the detected pedaling force (See Patent Document 2).

### PRIOR ART DOCUMENT (S)

### PATENT DOCUMENT(S)

Patent Document 1: JP2007-091159A
Patent Document 2: US6196347B1

### SUMMARY OF THE INVENTION

### TASK TO BE ACCOMPLISHED BY THE INVENTION

Known technologies for power assisted bicycles as described above inconveniently require attaching pedaling force sensing means such as a strain gauge and a pedaling force sensor to a pedal or a crankshaft, which makes a resulting power assisted bicycle have a complicated structure. In particular, adding a pedaling force sensing feature to an existing bicycle necessitates major modifications to the bicycle, which renders it more difficult to retrofit and convert an existing bicycle to a power assisted bicycle.

The present invention has been made in view of the problem of the prior art, and a primary object of the present invention is to provide an electric power-assist device which can be used to retrofit and convert an existing bicycle to a power assisted bicycle, and enables proper power assist control in response to the pedaling force, without requiring major modifications to the bicycle.

### MEANS TO ACCOMPLISH THE TASK

An aspect of the present invention provides an electric power-assist device (50) for bicycles, wherein a bicycle (10) is provided with a crankshaft (24) configured to be driven by a pedaling force transmitted from a pedal (30) via a crankarm (28), the electric power-assist device comprising: an electric motor (58) connected to the crankshaft or the crankarm of the bicycle in a torque transmitting relationship; a rotation angle detection device (130) configured to detect a crank rotational angle of the crankshaft; an acceleration detection device (134) configured to detect an acceleration level in a fore and aft direction of the bicycle; and a control unit (150) configured to control the electric motor, wherein the control unit comprises: a pedaling force estimator (152) configured to estimate a pedaling force put on each pedal of the bicycle based on an acceleration level measured at a predetermined crank rotational angle; and a motor drive controller (158) configured to control the electric motor based on the pedaling force estimated by the pedaling force estimator.

This configuration, in which a pedaling force is estimated based on the acceleration level of a bicycle, can be used to retrofit and convert an existing bicycle to a power assisted bicycle with ease, and enables proper power assist control in response to the pedaling force, without requiring major modifications to the bicycle.

Preferably, the above electric power assist device is further configured such that the pedaling force estimator estimates the pedaling force based on an average of acceleration levels measured within a rotation angle range which includes the predetermined crank rotational angle.

This configuration can improve the accuracy of estimation of pedaling force based on the acceleration level of a bicycle.

Preferably, the above electric power assist device is further configured such that the predetermined crank rotational angle comprises an angular position of 90 degrees from the top dead center of the pedal.

This configuration enables the accurate estimation of pedaling force based on the acceleration level of a bicycle.

Preferably, the above electric power assist device is further configured such that the pedaling force estimator estimates the pedaling force based on a variation between first and second acceleration levels measured at different first and second crank rotational angles, respectively.

This configuration enables the estimation of pedaling force without significant influence of changes in acceleration of the bicycle 10 when it is traveling on a slope or steps.

Preferably, the above electric power assist device is further configured such that the pedaling force estimator estimates the pedaling force based on a variation between first and second averages of acceleration levels measured within different first and second rotation angle ranges, respectively, and wherein different first and second rotation angle ranges include the first and second crank rotational angles, respectively.

This configuration can improve the accuracy of estimation of pedaling force based on the acceleration level of a bicycle.

Preferably, the above electric power assist device is further configured such that the electric power assist device further comprises a current sensor (140) for detecting and measuring currents in the electric motor, wherein, when the variation between the first and second acceleration levels is equal to or greater than a predetermined value, the pedaling force estimator estimates the pedaling force based on the variation between the first and second acceleration levels or the variation between the first and second averages of acceleration levels, and wherein, when the variation between the first and second acceleration levels is lower than the predetermined value, the pedaling force estimator estimates the pedaling force based on a variation between first and second current levels measured at the first and second crank rotational angles, respectively.

This configuration can provide an amount of power assist according to the pedaling force based on the motor current level when it is difficult to estimate pedaling forces from the acceleration levels of a bicycle. As a result, the electric power assist device can provide a proper amount of power assist according to the pedaling force in various pedaling conditions.

The above electric power assist device may be further configured such that the pedaling force estimator estimates the pedaling force based on a variation between first and second averages of current levels measured within the first and second rotation angle ranges, respectively.

This configuration can improve the accuracy of estimation of pedaling force based on the motor current level.

Preferably, the above electric power assist device is further configured such that the pedaling force estimator calculates angular velocity levels of the crankshaft from crank rotational angles, wherein, when the variation between the first and second acceleration levels or the variation between the first and second averages of acceleration levels is equal to or greater than a predetermined value, the pedaling force estimator estimates the pedaling force based on the variation between the first and second acceleration levels, and wherein, when the variation between the first and second acceleration levels or the variation between the first and second averages of acceleration levels is lower than the predetermined value, the pedaling force estimator estimates the pedaling force based on a variation between first and second angular velocity levels acquired at the first and second crank rotational angles, respectively.

This configuration can provide an amount of power assist according to the pedaling force based on the angular velocity level of the crankshaft when it is difficult to estimate pedaling forces from the acceleration levels of a bicycle. As a result, the electric power assist device can provide a proper amount of power assist according to the pedaling force in various pedaling conditions.

Preferably, the above electric power assist device is further configured such that the pedaling force estimator estimates the pedaling force based on a variation between first and second averages of angular velocity levels acquired within the first and second rotation angle ranges, respectively.

This configuration can improve the accuracy of estimation of pedaling force based on the angular velocity level of the crankshaft.

Preferably, the above electric power assist device is further configured such that the pedaling force estimator calculates angular acceleration levels of the crankshaft from crank rotational angles, wherein, when the variation between the first and second acceleration levels is equal to or greater than a predetermined value, the pedaling force estimator estimates the pedaling force based on the variation between the first and second acceleration levels or the variation between the first and second averages of acceleration levels, and wherein, when the variation between the first and second acceleration levels or the variation between the first and second averages of acceleration levels is lower than the predetermined value, the pedaling force estimator estimates the pedaling force based on a variation between first and second angular acceleration levels acquired at the first and second crank rotational angles, respectively.

This configuration can provide an amount of power assist according to the pedaling force based on the angular acceleration level of the crankshaft when it is difficult to estimate pedaling forces from the acceleration levels of a bicycle. As a result, the electric power assist device can provide a proper amount of power assist according to the pedaling force in various pedaling conditions.

Preferably, the above electric power assist device is further configured such that the pedaling force estimator estimates the pedaling force based on a variation between first and second averages of angular acceleration levels acquired within the first and second rotation angle ranges, respectively.

This configuration can improve the accuracy of estimation of pedaling force based on the angular acceleration level of the crankshaft.

Preferably, the above electric power assist device is further configured such that one of the first and second crank rotational angles comprises an angular position of the top dead center of the pedal, and the other comprises an angular position of 90 degrees from the top dead center of the pedal.

This configuration enables highly accurate estimation of pedaling force based on the motor current level, the angular velocity level of the crankshaft, or the angular acceleration level of the crankshaft.

Preferably, the above electric power assist device is further configured such that the electric power assist device further comprises a tilt angle detection device (136) configured to detect tilt angles of the bicycle with respect to the direction of gravity, wherein the pedaling force estimator corrects the estimated pedaling force according to the tilt angle.

This configuration can provide a proper amount of power assist when the bicycle is traveling on a slope or making a turn.

Another aspect of the present invention provides a bicycle fitted with the above electric power assist device.

This configuration enables proper power assist control in response to the pedaling force, without requiring major modifications to the bicycle.

### EFFECT OF THE INVENTION

An electric power-assist device according to the present invention can be used to retrofit and convert an existing bicycle to a power assisted bicycle with ease, and enables proper power assist control in response to the pedaling force, without requiring major modifications to the bicycle.

### BRIEF DESCRIPTION OF THE DRAWINGS

Figure 1 is a side view of a bicycle fitted with an electric power assist device according to a first embodiment of the present invention;
Figure 2 is a perspective view of the bicycle fitted with the electric power assist device of the first embodiment;
Figure 3 is a fragmentary exploded perspective view of the electric power assist device and the bicycle of the first embodiment;
Figure 4 is a block diagram of a control system for the electric power assist device of the first embodiment;
Figure 5 is an explanatory view showing the relationship between the position of the pedal and the crank rotational angle of the bicycle of the first embodiment;
Figure 6 is a graph showing the relationship between the acceleration level and the crank rotational angle of the bicycle;
Figure 7 is a flowchart of power assist control of the electric power assist device of the first embodiment;
Figure 8 is a block diagram of a control system for an electric power assist device according to a second embodiment of the present invention;
Figure 9 is a flowchart of power assist control of the electric power assist device of the second embodiment;
Figure 10 is a flowchart of power assist control of the electric power assist device of a third embodiment of the present invention;
Figure 11 is a flowchart of power assist control of the electric power assist device of a fourth embodiment of the present invention; and
Figure 12 is an explanatory view showing the relationship between the position of the pedal and the crank rotational angle of the bicycle according to a variation of the above-described embodiments.

### DESCRIPTION OF THE PREFERRED EMBODIMENT(S)

A bicycle fitted with an electric power assist device of embodiments of the present invention will be described with reference to the drawings.

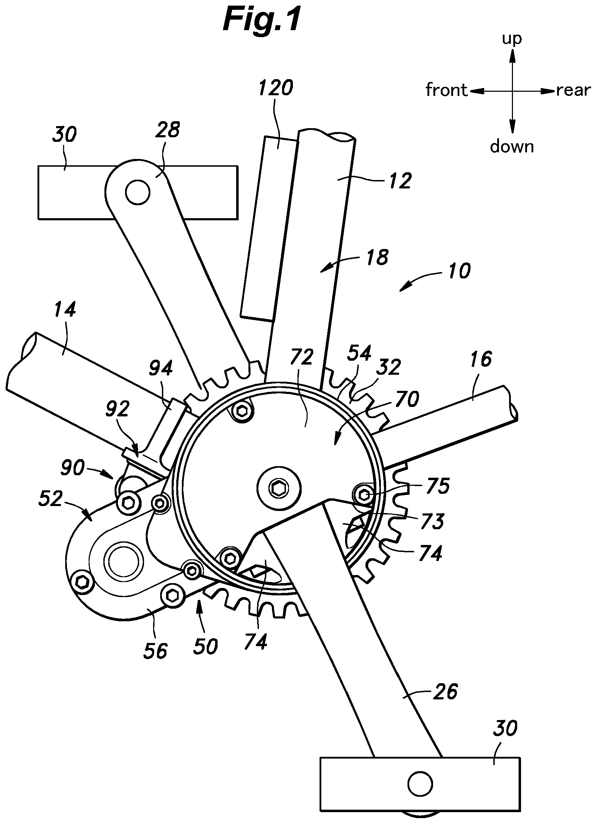

As shown in Figures 1 to 3, a bicycle 10 is provided with a frame structure 18 that includes a seat tube 12 extending substantially in the vertical direction and having a saddle (not shown) attached to the upper end thereof, a down tube 14 extending substantially in the fore and aft direction, and left and right chain stays 16. The lower end of the seat tube 12, the rear end of the down tube 14, and the front ends of the chain stays 16 are connected to one another by a bearing tube 20 for supporting a crankshaft and also serving as a pipe joint.

The bearing tube 20 rotatably supports a crankshaft 24 extending substantially horizontally in the lateral direction. The left and right shaft ends of the crankshaft 24 project out of the bearing tube 20, and the base ends of the left and right crankarms 26 and 28 are fixed to the respective shaft ends of the crankshaft 24 with a rotational phase difference of 180 degrees. The crankshaft 24 forms the rotational center of the crankarms 26 and 28, and the rotational center axis of the crankshaft 24 and the rotational center axis of the crankarms 26 and 28 coincide with each other.

A spline shaft portion 24A is formed on the outer circumferential surface of the shaft end of the crankshaft 24. A spline hole 26A is formed at the base end of the crankarm 26. The spline shaft portion 24A and the spline hole 26A are engaged with each other so that the crankshaft 24 and the crankarm 26 are connected to each other in a torque transmitting relationship.

The outer end of the crankshaft 24 is formed with a screw hole 24B opened at the end surface thereof. The base end of the crankarm 26 is formed with a screw hole 26B coaxially communicating with the spline hole 26A and having an inner diameter larger than that of the spline hole 26A. The screw hole 24B threadably engages a crankarm mounting screw 27 provided with a flange portion that abuts against the annular shoulder surface defined between the spline hole 26A and the screw hole 24B. As a result, the crankarm 26 is prevented from being dislodged from the crankshaft 24.

The connection between the crankshaft 24 and the crankarm 28 on the other side is made in the same manner as the above discussed connection between the crankshaft 24 and the crankarm 26.

A pedal 30 is attached to the free end of each crankarm 26, 28. A drive sprocket 32 (chain wheel) is positioned between the crankarm 28 on the right side and the bearing tube 20. The drive sprocket 32 is coaxially connected (fixed) to the crankshaft 24.

The crankshaft 24 can be rotationally driven by the left and right crankarms 26 and 28. The rotation of the crankshaft 24 is transmitted to the drive sprocket 32, and is transmitted from the drive sprocket 32 to the rear wheel (not shown in the drawings) by a chain transmission mechanism (not shown in the drawings). As a result, the electric power assisted bicycle 10 travels forward.

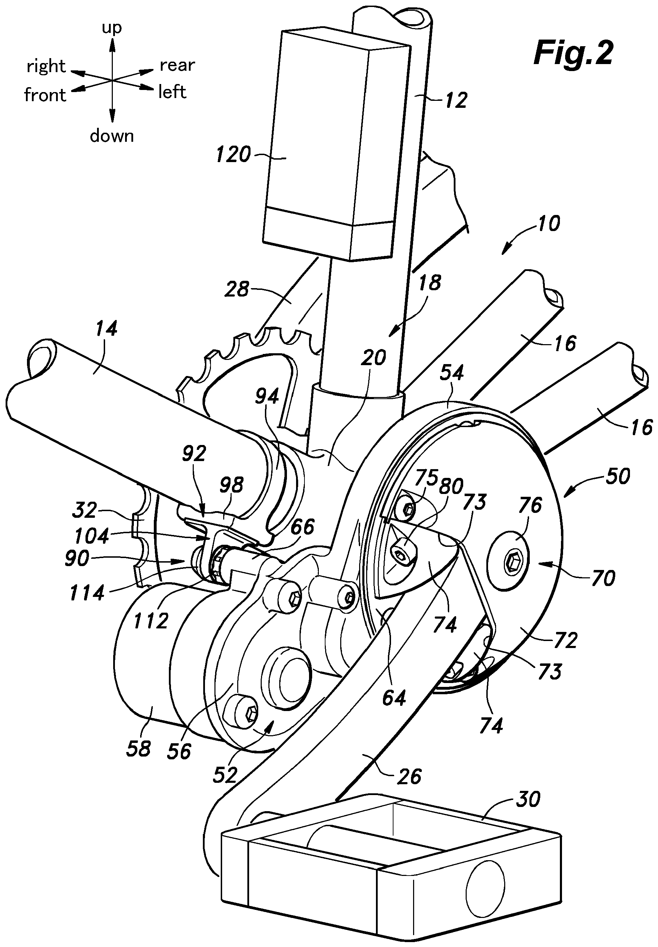

The electric power assisted bicycle 10 is provided with a unitized and retrofittable electric power assist device 50. In the following description, the various directions such as up/down, front/rear, and right/left are based on the state where the electric power assist device 50 is attached to the frame structure 18 of the electric power assisted bicycle 10 as shown in Figures 1 and 2.

The electric power assist device 50 is provided with a housing 52 having a hollow structure. The housing 52 includes a ring portion 54 and a tongue shaped extension portion 56 extending radially outward from the ring portion 54. An electric motor 58 is attached to the right surface of the extension portion 56. One end of the electric motor 58 is fixed to the extension portion 56 so that the rotational axis of the rotor output shaft (not shown) is directed in the lateral direction.

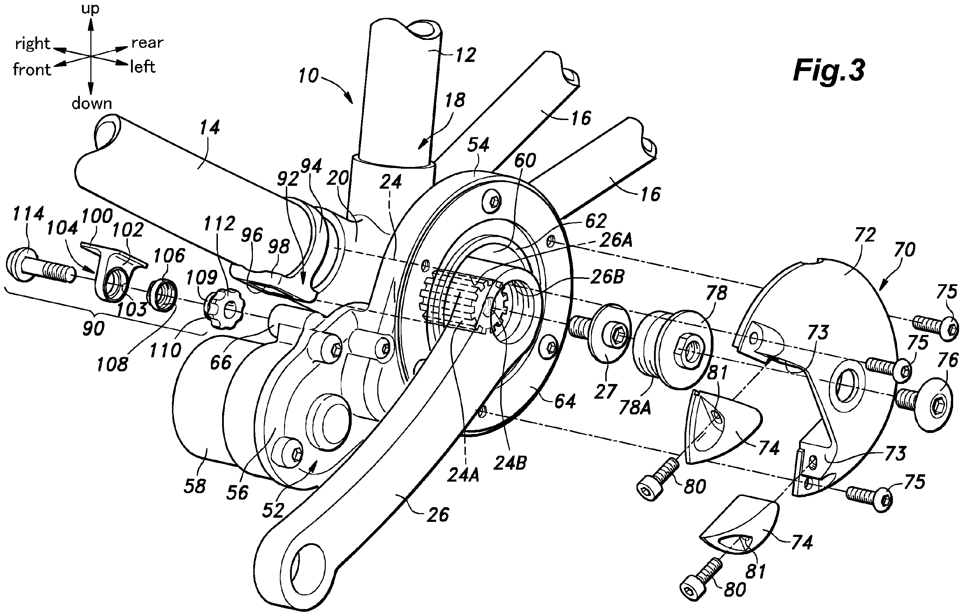

As shown in Figure 3, the ring portion 54 includes a cylindrical portion 62 centrally defining a central opening 60 that is open in the lateral direction, The cylindrical portion 62 rotatably supports an annular rotation output member 64 on the outer periphery thereof. The cylindrical portion 62, together with the rotation output member 64, is disposed in a space between the frame structure 18 and the crankarm 26 in a coaxial relationship with the crankshaft 24 while the crankshaft 24 extends laterally through the central opening 60 in a loosely received state. The rotation output member 64 is connected to the electric motor 58 in a torque transmitting relationship via a gear train (not shown) provided in the housing 52, and is thereby rotationally driven by the electric motor 58 in a coaxial relationship with the crankshaft 24.

The cylindrical portion 62 and the rotation output member 64 are installed in the space between the frame structure 18 and the crankarm 26 by the following procedure.

First, the left pedal 30 which is on the side not fitted with the drive sprocket 32 is removed by using a common tool such as a spanner. Next, with the electric power assist device 50 tilted sideways (the posture in which the electric motor 58 faces upward), the free end side of the left crankarm 26 is inserted into the central opening 60, and with the crankarm 26 passed into the central opening 60, the electric power assist device 50 is moved toward the base end side (rotational center side) of the crankarm 26 along the extending direction of the crankarm 26.

As a result, the crankarm 26 is passed through the cylindrical portion 62 and the rotation output member 64 until the cylindrical portion 62 and the rotation output member 64 are positioned near the base end of the crankarm 26. The inner diameter of the central opening 60 is dimensioned so that the crankarm 26 may be passed through the central opening 60. When the central opening 60 has a large enough inner diameter to allow the pedal 30 attached to the crankarm 26 to be pass through, the assembly work can be performed without requiring the pedal 30 to be removed.

Next, the electric power assist device 50 is oriented to the normal posture (the posture shown in Figure 2) in which the electric motor 58 faces sideways, and the crankshaft 24 is loosely passed into the central opening 60 in the axial direction. As a result, the cylindrical portion 62 and the rotation output member 64 can be positioned between the frame structure 18 and the crankarm 26 with the crankshaft 24 extending laterally and loosely received in the central opening 60 simply by removing the pedal 30 or without even requiring the pedal 30 to be removed.

The rotation output member 64 is connected to the crankshaft 24 and the crankarm 26 by a connecting mechanism 70. The connecting mechanism 70 includes a connecting main member 72 and two clamp members 74.

The screw hole 26B of the crankarm 26 threadably receives a male screw portion 78A of a flanged screw member 78 constituting a mount part for the crankarm 26 of the connecting main member 72. The connecting main member 72 has a substantially circular disk shape, and is fixed to the rotation output member 64 at the peripheral edge thereof by a plurality of bolts 75 and to the screw member 78 at the central part thereof by a bolt 76. As a result, the rotation output member 64 is coaxially positioned relative to the crankshaft 24 via the connecting main member 72 and the crankarm 26.

The two clamp members 74, each having a wedge shape, are positioned on either side of the base end part of the crankarm 26 with respect to the rotational direction thereof, such that each clamp member 74 is in contact with an angled edge 73 of a corresponding connecting main member 72. A bolt 80 is provided for each clamp piece member 74, and as the bolts 80 are tightened to connect the clamp members 74 to the connecting main member 72, the clamp members 74 are caused to slide toward each other guided by the angled edges with interposing the crankarm 26 from both sides with respect to the rotational direction, so that the crankarm 26 and the connecting main member 72 are connected to each other in a torque transmitting relationship.

As a result, the rotation output member 64 is coaxially connected to the crankshaft 24 in a torque transmitting relationship, via the connecting main member 72 and the crankarm 26, and thus the rotation output member 64 and the connecting main member 72 can rotate together with the crankshaft 24. The rotation output member 64 and the connecting main member 72 are collectively referred to as a rotating member.

The clamp members 74 define bolt through-holes 81 (see Figure 3), through which the bolts 80 are passed. The bolt through-holes 81 are each formed in an oval shape so that, as the bolts 80 are tightened to connect the clamp members 74 to the connecting main member 72, the clamp members 74 can slide toward each other.

The extension portion 56 of the housing 52 is positioned under the down tube 14 while supporting the electric motor 58. The extension portion 56 is supported by and suspended from the down tube 14 via a support mechanism 90.

The support mechanism 90 includes a mount member 92. The mount member 92 includes a support base member 98 fixed to the down tube 14 by a fastening band 94 and provided with a rectangular frame structure part 96 in a lower part thereof, and a support member 104, the support member 104 having a rectangular plate-shaped part 100 fitted into the rectangular frame structure part 96 and fixed to the support base member 98, and a depending piece 102 depending downward from the rectangular plate-shaped part 100 and extending in the fore and aft direction.

The depending piece 102 is a cantilever piece, and defines a through-hole 103 which extends in the axial direction of the crankshaft 24 (or in the lateral direction) and is provided with an annular shoulder. A cylindrical fixed bush 106 is fitted in (or fixed to) the through-hole 103 of the depending piece 102 in a rotationally fast manner.

A female screw 108 is formed on the inner circumferential surface of the fixed bush 106. A male screw 109 formed on the outer circumferential surface of a movable bush 110 is threaded with the female screw 108 so that the movable bush 110 can be threaded into and out of the large diameter portion 106B in the axial direction of the crankshaft 24 (i.e., in the lateral direction).

The movable bush 110 is provided with a flange part 112 on the side remote from the fixed bush 106. The outer circumference of the flange part 112 is provided with an uneven shape similar to flower petals so that the movable bush 110 can be turned by hand. The flange surface 112A of the flange part 112 is in direct contact with the laterally inwardly facing end surface 66A of a boss part (connecting part) 66 formed on an upper part of the extension portion 56 of the housing 52.

The mount member 92 fixedly supports the housing 52 with a fastening bolt 114 which is centrally passed through the fixed bush 106 and the movable bush 110 in the axial direction of the crankshaft 24, and threaded into a screw hole 68 (not shown) of the boss part 66.

In this way, the fixed bush 106 and the movable bush 110 are provided with a screw mechanism formed by the female screw 108 and the male screw 109 extending in the axial direction of the crankshaft 24 between the housing 52 and the frame structure 18, the screw mechanism forms an adjustment mechanism capable of adjusting (increasing or decreasing) the distance between the mount member 92 and the housing 52 along the axial direction of the crankshaft 24.

By suitably adjusting the distance along the axial direction, the tilting of the rotation output member 64 with respect to the central axis (crankshaft line) of the crankshaft 24 can be corrected, and the posture of the rotation output member 64 can be adjusted so that the rotation output member 64 extends along a plane orthogonal to the crankshaft axial line.

The extension portion 56 of the housing 52 contains a control unit 150 for electric power assist therein. A battery 120 consisting of a secondary battery that serves as a power source for the electric motor 58 and the control unit 150 is attached to the seat tube 12 by a fastening band (not shown) or any other fastening means.

### (First Embodiment)

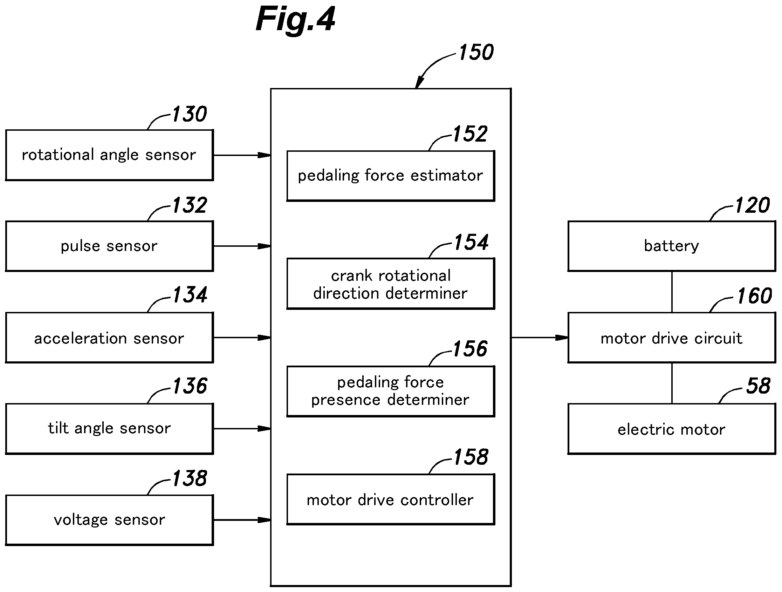

Next, the control system of the electric power assist device 50 will be described with reference to Figure 4.

Connected to the control unit 150 are a rotational angle sensor (rotational angle detection device) 130, a pulse sensor 132, an acceleration sensor (acceleration detection device) 134, a tilt angle sensor (tilt angle detection device) 136, and a voltage sensor 138.

The rotational angle sensor 130 is provided in or on the electric motor 58 or the housing 52, and detects the motor rotational angle or the rotational angle of the rotation output member 64 as a rotational angle (hereinafter, crank rotational angle) θc of the crankshaft 24.

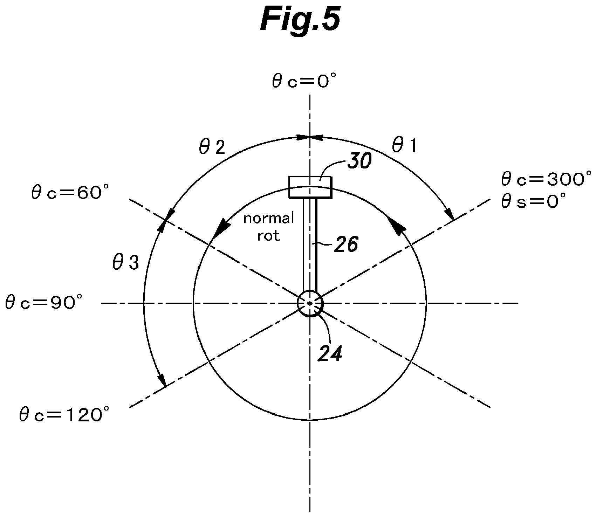

The pulse sensor 132 is provided in the housing 52 and detects the zero point (θc = 0 degree) of the crank rotational angle θc for each rotation of the rotation output member 64. As shown in Figure 5, the crank rotational angle θc = 0 degrees is preset to the rotational angle of the crankshaft 24 in which the pedal 30 of the crankarm 26 is located at the highest position (top dead center position).

The actual zero point (θs = 0 degrees) of the pulse sensor 132 does not need to be the crank rotational angle at which the pedal 30 is located at the highest position, and may be, for example, at the crank rotational angle θc = 300 degrees. In this case, the control unit 150 performs a calibration operation for eliminating the phase difference of 300 degrees between the positions at θc = 0 degree and θs = 0 degree, respectively.

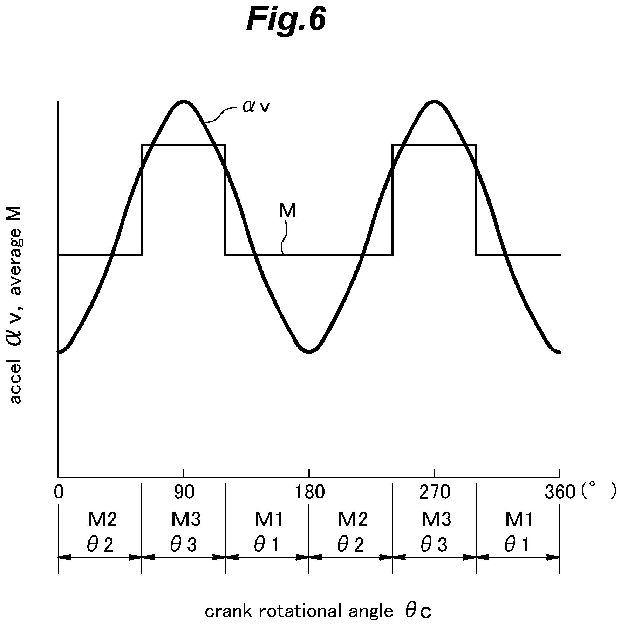

The acceleration sensor 134 is provided in the housing 52 and detects the acceleration (acceleration level of a bicycle) αv in the fore and aft direction (traveling direction) of the bicycle 10. As shown in Figure 6, the acceleration level αv is correlated with the pedaling force and periodically changes according to the crank rotational angle θc in a cycle of 180 degrees of the crank rotational angle, so that the waveform of αv is similar to a sinusoidal waveform. Thus, the acceleration level αv is αv is minimum at a crank rotational angle θc = 0 degrees, maximum at θc = 90 degrees, minimum again at θc = 180 degrees, maximum again at θc = 270 degrees, and minimum at θc = 360 degrees.

The tilt angle sensor 136 is provided in the housing 52 and detects tilt angles with respect to gravity, that is, tilt angles in the fore and aft direction and in the left-right direction of a bicycle 10 with respect to the vertical line.

In the above embodiments, the acceleration sensor 134 and the tilt angle sensor 136 are used to acquire acceleration levels αv and tilt angles with respect to the vertical line of the bicycle 10. In other embodiments, one gyro sensor equipped with G sensor may be used to acquire both acceleration levels αv and tilt angles with respect to the vertical line. In this case, output signals from the gyro sensor are subject to computational processing.

The voltage sensor 138 detects the voltage of the battery 120.

The control unit 150 is an electronically controlled device including a microcomputer and other components. The control unit 150 includes a pedaling force estimator 152, a crank rotational direction determiner 154, a pedaling force presence determiner 156, and a motor drive controller 158.

The pedaling force estimator 152 acquires information related to the crank rotational angle θc from the rotational angle sensor 130, information related to the crank rotational angle θc = 0 degree 24 from the pulse sensor 132, and information related to the acceleration level αv in the fore and aft direction of the bicycle 10 from the acceleration sensor 134. The pedaling force estimator 152 estimates the pedaling force of the bicycle 10 from the average value M3 of the acceleration levels αv within a preset crank rotational angle range θ3, such as the range of θc from 60 to 120 degrees with respect to θc = 0 degrees in the normal rotation. The crank rotational angle range θ3 is a range including the crank rotational angle θc = 90 degrees at which the acceleration level αv reaches its peak in one rotation of the crankshaft driven by pedaling. The pedaling force estimator 152 estimates that the greater the average value M3 of the acceleration levels αv is, the greater the pedaling force.

The estimation of pedaling force is made based on the average value M3 of the acceleration levels αv within the crank rotational angle range θ3, including the crank rotation angle θc = 90 degrees at which the acceleration level αv reaches its peak in one rotation of the crankshaft driven by pedaling. Thus, more highly accurate and proper estimation of pedaling force can be made compared to the cases where the crank rotational angle range does not include the crank rotation angle θc = 90 degrees, or an average value in this range of acceleration levels is not used.

The motor drive controller 158 outputs a drive torque control command to a motor drive circuit 160 so as to operate the electric motor 58 with an electric power (current or voltage) according primarily to the pedaling force estimated by the pedaling force estimator 152.

The crank rotational direction determiner 154 determines whether the crankshaft 24 is rotating in a forward direction or in a reverse direction based on a change in the crank rotational angle θc detected by the rotational angle sensor 130. When the crank rotational direction determiner154 determines that the crankshaft 24 rotates in the reverse direction, the motor drive controller 158 performs control to cause the electric motor 58 to stop operating. This prevents the provision of unnecessary power assist when the crankshaft 24 rotates in the reverse direction.

The pedaling force presence determiner 156 determines whether or not a pedaling force is put on a pedal 30, which means a rider is working the pedal 30, based on whether or not there is a change in the crank rotational angle θc of the crankshaft 24 detected by the rotational angle sensor 130.

When the pedaling force presence determiner 156 determines there is no pedaling force on the pedal, the motor drive controller 158 performs control such that the electric motor 58 stops operating. This prevents the provision of unnecessary power assist when there is no pedaling force on the pedal.

The motor drive circuit 160 quantitatively controls the electric power to be supplied from the battery 120 to the electric motor 58 according to the control command from the motor drive controller 158. As a result, the electric motor 58 assists the pedaling with the drive torque determined according to the estimated value of the pedaling force.

The motor drive controller 158 further performs control so as to increase or decrease the rotation output of the electric motor 58 according to the tilts of the bicycle 10 in the left-right direction and the fore and aft direction detected by the tilt angle sensor 136. As a result, when the bicycle 10 is tilted to the left or right during making a turn or being under other conditions, the motor drive controller 158 decreases an amount of power assist, and when the bicycle 10 tilts in the fore and aft direction when traveling an uphill road or under other conditions, the motor drive controller 158 increases an amount of power assist.

As a result, the electric power assist device 50 can provide properly adjusted power assist under various traveling conditions.

The motor drive controller 158 further performs correction control so as to reduce the rotation output of the electric motor 58 in response to the decrease in the voltage applied by the battery 120 detected by the voltage sensor 138. This feature prevents over-discharging of the battery 120, thereby extending the life of the battery 120. This feature can also reduce the power consumption of the battery 120, thereby extending the power assist available distance (duration time) on one charge of the battery 120.

The above described control system can provide power assist based on the pedaling force estimated from the acceleration level αv in the fore and aft direction of the bicycle 10. Since the electric power assist device 50 does not require a strain gauge, a pedaling force sensor, or other sensing means for detecting the pedaling force, the electric power assist device 50 can be attached to a bicycle 10, without requiring major modifications to the bicycle. As a result, the electric power assist device 50 can be used to retrofit and convert an existing bicycle to a power assisted bicycle with ease.

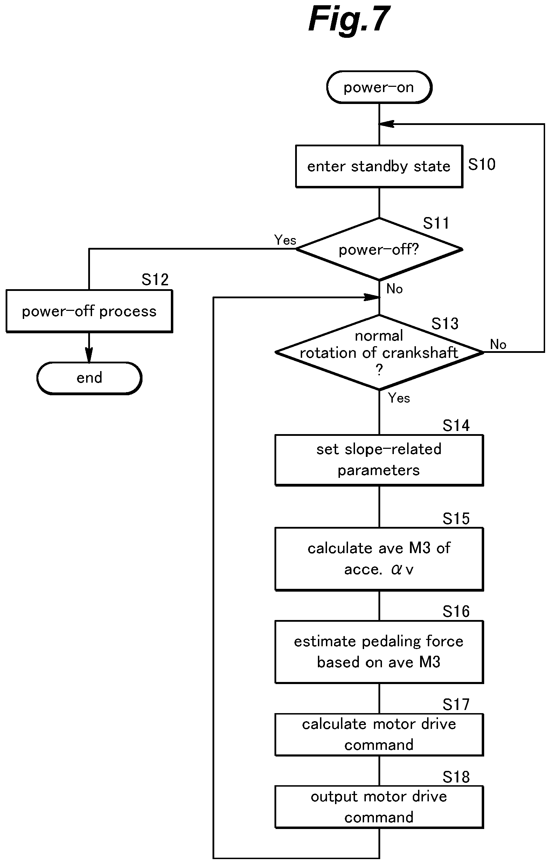

Next, a basic control routine of the control unit 150 (control routine of the first embodiment) will be described with reference to the flowchart shown in Figure 7.

This control routine is started when the electric power assist device 50 is powered on. First, the electric power assist device 50 performs a standby state entry process, causing the electric power assist device 50 to enter a standby state (step S10). The standby state entry process involves feeding power to the sensors 130, 132, 134, 136, and 138 to activate them, and stopping the electric motor 58.

Next, the control unit 150 determines whether or not the electric power assist device 50 is powered off (step S11). When the electric power assist device 50 is powered off, the control unit 150 performs a power-off process (step S12). The power-off process involves stopping the power supply to each of the sensors 130, 132, 134, 136 and 138.

When the electric power assist device 50 is not powered off, the control unit 150 determines whether or not the crankshaft 24 rotates in the normal direction based on signals from the rotational angle sensor 130 (step S13). When the crankshaft 24 does not rotate in the normal direction; that is, when a pedaling force is not put on the pedal 30, the control routine returns to the standby state entry process (step S10) so that the electric motor 58 is kept stopped so as not to assist the pedaling.

When the crankshaft 24 rotates in the normal direction, the control unit 150 sets control parameters such as slope-related parameters and correction values for the estimation of pedaling force (step S14). The control unit 150 sets the control parameters according to the state of the slope, i.e., the tilt angle of the bicycle 10 in the fore and aft direction recognized by signals from the tilt angle sensor 136. For example, when the bicycle 10 is traveling on a downhill road, the control unit 150 sets the control parameters such that the estimated pedaling force decreases or becomes zero regardless of the acceleration level in the fore and aft direction detected by the acceleration sensor 134, while when the bicycle 10 is traveling on an uphill road, the control unit 150 sets the control parameters such that the pedaling force estimated based on the acceleration level in the fore and aft direction is corrected to a greater estimated pedaling force than that when the bicycle is traveling on a flat road. When the bicycle 10 is making a turn, the control unit 150 sets the control parameters such that the pedaling force estimated based on the acceleration level in the left-right direction is corrected to a smaller estimated pedaling force than that when the bicycle is traveling straight on a flat road.

Next, the control unit 150 calculates an average value M3 of acceleration levels αv within the crank rotational angle range θ3 from signals from the acceleration sensor 134 (step S15). Next, the control unit 150 performs a calculation for estimating the pedaling force put on the bicycle 10 based on the average value M3 of the acceleration levels αv (step S16).

Next, the control unit 150 calculates a motor drive command value based on the estimated pedaling force (step S17), and outputs a signal of the motor drive command value to the motor drive circuit 160 (step S18).

Then, the process returns to the step of determining whether or not the crankshaft 24 rotates in the normal direction (step S13), and the control unit 150 repeatedly performs the steps of calculating an average value M3 of the acceleration levels αv to estimate a pedaling force, generating a motor drive command value based on the estimated pedaling force, and outputting a signal of the motor drive command value to the motor drive circuit 160 (steps S14 to S18).

In this way, the electric power assist device 50 drives the electric motor 58 based on motor drive command values, thereby providing an assist power appropriate for a pedaling force estimated from acceleration levels αv of the bicycle.

### (Second Embodiment)

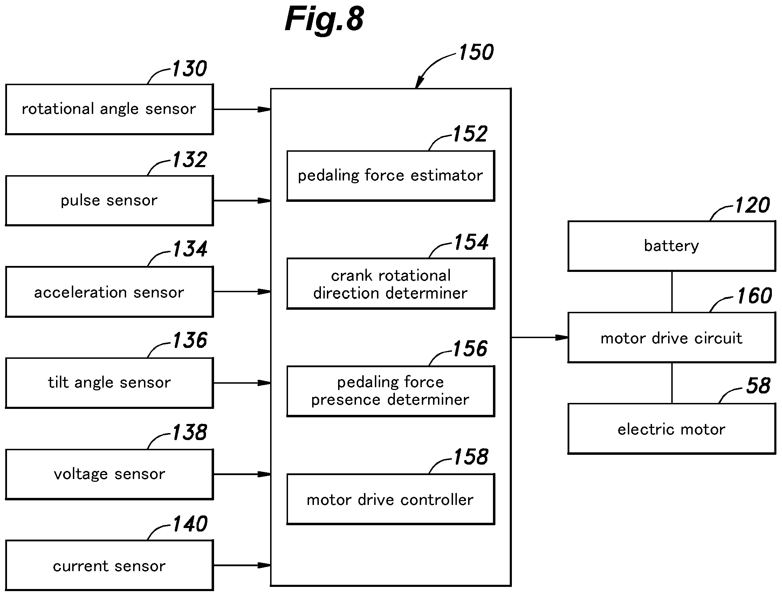

Next, a control system of an electric power assist device 50 according to a second embodiment of the present invention will be described with reference to Figure 8. In Figure 8 the parts corresponding to those in Figure 4 are denoted with like reference numerals without necessarily repeating the description of such parts.

The control system of an electric power assist device 50 of the second embodiment further includes a current sensor 140 connected to the control unit 150 for detecting motor current values I in the electric motor 58.

The pedaling force estimator 152 acquires information related to the crank rotational angle θc from the rotational angle sensor 130, information related to the crank rotational angle θc = 0 degree 24 from the pulse sensor 132, and information related to the acceleration level αv in the fore and aft direction of the bicycle 10 from the acceleration sensor 134. The pedaling force estimator 152 estimates the pedaling force of the bicycle 10 based on the variation between the average values M3 and M2 of acceleration levels αv within preset crank rotational angle ranges θ3 and θ2, respectively, where, for example, the preset crank rotational angle range θ3 is the range of θc from 60 to 120 degrees with respect to θc = 0 degree in the normal rotation, and the preset crank rotational angle range θ2 is the range of θc from 0 to 60 degrees with respect to θc = 0 degree in the normal rotation.

The variation between the average value M3 and the average value M2 is a difference (M3-M2) or a ratio (M3/M2). The pedaling force estimator 152 estimates a pedaling force such that the greater the difference (M3-M2) or the ratio (M3/M2) is, the greater the estimated pedaling force.

The estimation of pedaling force is made based on the variation between the average values M3 and M2 of the acceleration levels αv within the crank rotational angle ranges θ3 and θ2, respectively, where the crank rotational angle range θ3 includes the crank rotation angle θc = 90 degrees at which the acceleration level αv reaches its peak in one rotation of the crankshaft driven by pedaling, and the crank rotational angle range θ2 includes the crank rotation angle θc = 0 degree at which the acceleration level αv reaches its minimum in one rotation of the crankshaft driven by pedaling. Thus, more highly accurate and proper estimation of pedaling force can be made compared to the cases where the crank rotational angle ranges do not include the crank rotation angle θc = 90 degrees and θc = 0 degree or respective average values of acceleration levels in those ranges are not used.

In addition, this configuration, in which the estimation of pedaling force is made based on the variation between the average values M3 and M2, enables the estimation of pedaling force without significant influence of changes in acceleration of the bicycle 10 when it is traveling on a slope or steps.

The pedaling force estimator 152 further acquires information related to motor current values I in the electric motor 58 from the current sensor 140. When the variation between the average values M3 and M2 of acceleration levels αv of the bicycle is small to the extent that makes it difficult for the pedaling force estimator 152 to estimate the pedaling force based on acceleration levels αv of the bicycle, the pedaling force estimator 152 uses current levels I in place of acceleration levels αv such that the pedaling force estimator 152 estimates the pedaling force of the bicycle 10 based on the variation (difference or ratio) between a current level 12 at the crank rotational angle θc = 0 degree and a current level 13 at the crank rotational angle θc = 90 degrees.

In this case, the pedaling force estimator 152 estimates a pedaling force such that the greater the difference (12-13) or the ratio (12/13) between motor current levels (12,13) is, the greater the estimated pedaling force.

The pedaling force estimator 152 may estimate a pedaling force based on the variation (difference or ratio) between the average values of motor current levels within first and second crank rotational angle ranges, respectively, where, for example, the first crank rotational angle range θ2 is the range of θc from 0 to 60 degrees with respect to θc = 0 degree, and the second crank rotational angle range θ3 is the range of θc from 60 to 120 degrees with respect to θc = 0 degree.

In this way, when it is difficult for the pedaling force estimator 152 to estimate a pedaling force based on acceleration levels αv of the bicycle, this configuration can assist pedaling based on motor current levels in place of acceleration levels αv of the bicycle. Thus, this configuration can provide a proper amount of power assist according to the pedaling force in various pedaling conditions.

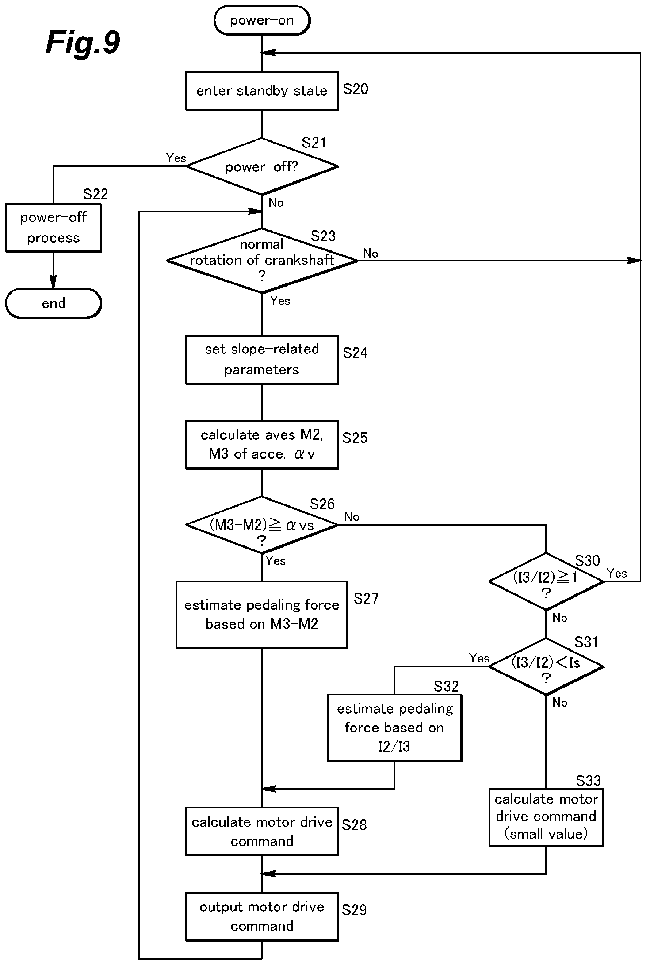

Next, a basic control routine of the control unit 150 according to the second embodiment will be described with reference to the flowchart shown in Figure 9.

This control routine is started when the electric power assist device 50 is powered on. First, the electric power assist device 50 performs a standby state entry process, causing the electric power assist device 50 to enter a standby state (step S20). The standby state entry process involves feeding power to the sensors 130, 132, 134, 136, 138, and 140 to activate them, and stopping the electric motor 58.

Next, the control unit 150 determines whether or not the electric power assist device 50 is powered off (step S21). When the electric power assist device 50 is powered off, the control unit 150 performs a power-off process (step S22). The power-off process involves stopping the power supply to each of the sensors 130, 132, 134, 136, 138 and 140.

When the electric power assist device 50 is not powered off, the control unit 150 determines whether or not the crankshaft 24 rotates in the normal direction based on signals from the rotational angle sensor 130 (step S23). When the crankshaft 24 does not rotate in the normal direction; that is, when a pedaling force is not put on the pedal 30, the control routine returns to the standby state entry process (step S20) so that the electric motor 58 is kept stopped so as not to assist the pedaling.

When the crankshaft 24 rotates in the normal direction; that is, when a pedaling force is put on the pedal 30, after one rotation of the crankshaft (step S24), the control unit 150 calculates average values M2 and M3 of acceleration levels αv within the crank rotational angle ranges θ2 and θ3, respectively, from signals from the acceleration sensor 134 (step S25).

Next, the control unit 150 determines whether or not the difference (M3-M2) is equal to or greater than a present threshold value αvs; that is, whether or not the variation between the averages of acceleration levels αv of the bicycle within the crank rotational angle ranges θ2 and θ3, respectively, is equal to or greater than the threshold value αvs (step S26).

When the difference (M3-M2) is equal to or greater than the threshold value αvs, the control unit 150 performs a calculation for estimating the pedaling force put on the bicycle 10 based on the difference (M3-M2) (step S27), calculates a motor drive command value based on the estimated pedaling force (step S28), and outputs a signal of the motor drive command value to the motor drive circuit 160 (step S29).

When the difference (M3-M2) is less than the threshold value αvs, the control unit 150 determines whether or not the ratio (13/12) of a current level 13 at the crank rotational angle θc = 90 degrees to a current level 12 at the crank rotational angle θc = 0 degree is equal to or greater than one (step S30). When the ratio (13/12) is equal to or greater than one; that is, when a pedaling force is not put on the pedal 30, the control routine returns to the standby state entry process (step S20).

When the ratio (13/12) is less than one; that is, when a pedaling force is put on the pedal 30, the control unit 150 determines whether or not the ratio (13/12) is equal to or greater than a present threshold value Is (step S31).

When the ratio (13/12) is less than the threshold value Is, the control unit 150 performs a calculation for estimating the pedaling force put on the bicycle 10 based on the ratio (12/13) (step S32), calculates a motor drive command value based on the estimated pedaling force (step S28), and outputs a signal of the motor drive command value to the motor drive circuit 160 (step S29).

When the ratio (13/12) is equal to or greater than the threshold value Is, the control unit 150 generates a motor drive command value of a predetermine fixed small value (step S33), and outputs a signal of the motor drive command value to the motor drive circuit 160 (step S29).

In either case, after the control unit 150 outputs to the motor drive circuit 160, the process returns to the step of determining whether or not the crankshaft 24 rotates in the normal direction (step S23), and the control unit 150 repeatedly performs the same steps to output a signal of the motor drive command value to the motor drive circuit 160 (steps S24 to S32).

In this way, the electric power assist device 50 drives the electric motor 58 based on motor drive command values. When the variation between the average values M3 and M2 of acceleration levels αv of the bicycle is equal to or greater than the threshold value αvs, the electric power assist device 50 provides an assist power appropriate for a pedaling force estimated from acceleration levels αv of the bicycle. When the variation between the average values M3 and M2 of acceleration levels αv of the bicycle is less than the threshold value αvs, the electric power assist device 50 provides an assist power appropriate for a pedaling force estimated from motor current levels I.

### (Third Embodiment)

Next, a control system of an electric power assist device 50 according to a third embodiment of the present invention will be described. In the third embodiment, the control system shown in Figure 4 may be used.

The pedaling force estimator 152 operates in the same manner as the second embodiment. The pedaling force estimator 152 acquires information related to the crank rotational angle θc from the rotational angle sensor 130, information related to the crank rotational angle θc = 0 degree 24 from the pulse sensor 132, and information related to the acceleration level αv in the fore and aft direction of the bicycle 10 from the acceleration sensor 134. The pedaling force estimator 152 estimates the pedaling force of the bicycle 10 based on the variation between the average values M3 and M2 of acceleration levels αv within preset crank rotational angle ranges θ3 and θ2, respectively, where, for example, the preset crank rotational angle range θ3 is the range of θc from 60 to 120 degrees with respect to θc = 0 degree in the normal rotation, and the preset crank rotational angle range θ2 is the range of θc from 0 to 60 degrees with respect to θc = 0 degree in the normal rotation.

The variation between the average value M3 and the average value M2 is a difference (M3-M2) or a ratio (M3/M2). The pedaling force estimator 152 estimates a pedaling force such that the greater the difference (M3-M2) or the ratio (M3/M2) is, the greater the estimated pedaling force.

The estimation of pedaling force is made in the same manner as the second embodiment; that is, the estimation of pedaling force is made based on the variation between the average values M3 and M2 of the acceleration levels αv within the crank rotational angle ranges θ3 andθ2, respectively, where the crank rotational angle range θ3 includes the crank rotation angle θc = 90 degrees at which the acceleration level αv reaches its peak in one rotation of the crankshaft driven by pedaling, and the crank rotational angle range θ2 includes the crank rotation angle θc = 0 degree at which the acceleration level αv reaches its minimum in one rotation of the crankshaft driven by pedaling. Thus, more highly accurate and proper estimation of pedaling force can be made compared to the cases where the crank rotational angle ranges do not include the crank rotation angle θc = 90 degrees and θc = 0 degree or respective average values of acceleration levels in those ranges are not used.

In addition, this configuration, in which the estimation of pedaling force is made based on the variation between the average values M3 and M2, enables the estimation of pedaling force without significant influence of changes in acceleration of the bicycle 10 when it is traveling on a slope or steps.

The pedaling force estimator 152 further acquires information related to crank rotational angles θc from the rotational angle sensor 130. When the variation between the average values M3 and M2 of acceleration levels αv of the bicycle is small to the extent that makes it difficult for the pedaling force estimator 152 to estimate the pedaling force based on acceleration levels αv of the bicycle, the pedaling force estimator 152 calculates angular velocity levels from derivative values at crank rotational angles θc, and estimates the pedaling force of the bicycle 10 based on the variation (difference or ratio) between an angular velocity level ω2 of the crankshaft 24 at the crank rotational angle θc = 0 degree and an angular velocity level ω3 of the crankshaft 24 at the crank rotational angle θc = 90 degrees.

In this case, the pedaling force estimator 152 estimates a pedaling force such that the greater the difference (ω3-ω2) or the ratio (ω3/ω2) between angular velocity levels (ω2, ω3) is, the greater the estimated pedaling force.

The pedaling force estimator 152 may estimate a pedaling force based on the variation (difference or ratio) between the average values of angular velocity levels within first and second crank rotational angle ranges, respectively, where, for example, the first crank rotational angle range θ2 is the range of θc from 0 to 60 degrees with respect to θc = 0 degree, and the second crank rotational angle range θ3 is the range of θc from 60 to 120 degrees with respect to θc = 0 degree.

In this way, when it is difficult for the pedaling force estimator 152 to estimate a pedaling force based on acceleration levels αv of the bicycle, this configuration can assist pedaling based on angular velocity levels ω of the crankshaft 24. Thus, this configuration can provide a proper amount of power assist according to the pedaling force in various pedaling conditions.

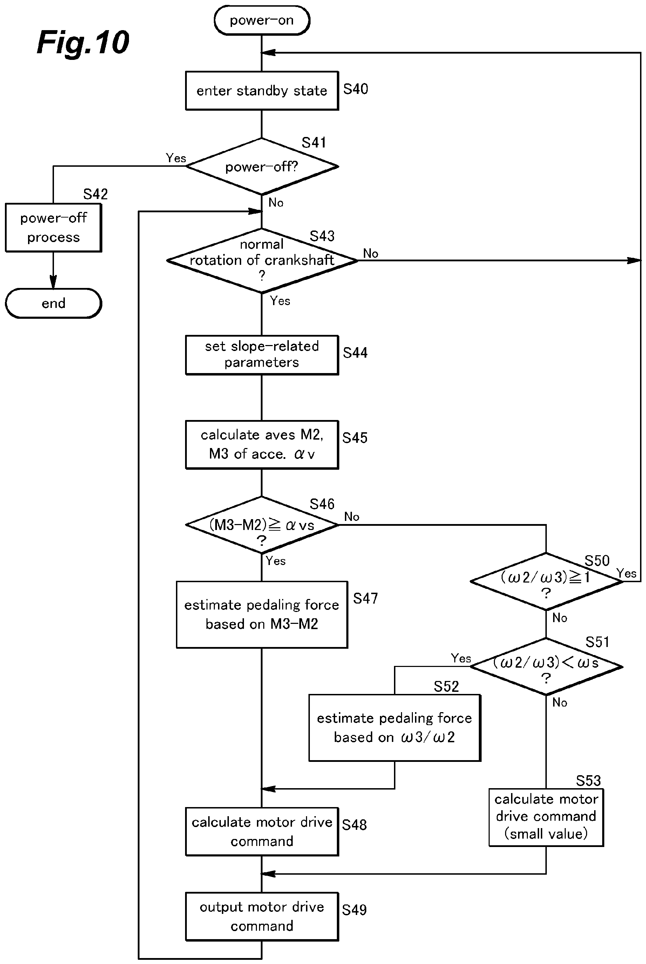

Next, a basic control routine of the control unit 150 according to the third embodiment will be described with reference to the flowchart shown in Figure 10.

This control routine is started when the electric power assist device 50 is powered on. First, the electric power assist device 50 performs a standby state entry process, causing the electric power assist device 50 to enter a standby state (step S40). The standby state entry process involves feeding power to the sensors 130, 132, 134, 136, and 138 to activate them, and stopping the electric motor 58.

Next, the control unit 150 determines whether or not the electric power assist device 50 is powered off (step S41). When the electric power assist device 50 is powered off, the control unit 150 performs a power-off process (step S42). The power-off process involves stopping the power supply to each of the sensors 130, 132, 134, 136 and 138.

When the electric power assist device 50 is not powered off, the control unit 150 determines whether or not the crankshaft 24 rotates in the normal direction based on signals from the rotational angle sensor 130 (step S43). When the crankshaft 24 does not rotate in the normal direction; that is, when a pedaling force is not put on the pedal 30, the control routine returns to the standby state entry process (step S40) so that the electric motor 58 is kept stopped so as not to assist the pedaling.

When the crankshaft 24 rotates in the normal direction; that is, when a pedaling force is put on the pedal 30, after one rotation of the crankshaft (step S44), the control unit 150 calculates average values M2 and M3 of acceleration levels αv within the crank rotational angle ranges θ2 and θ3, respectively, from signals from the acceleration sensor 134 (step S45).

Next, the control unit 150 determines whether or not the difference M3-M2 is equal to or greater than a present threshold value αvs; that is, whether or not the variation between the averages of acceleration levels αv of the bicycle within the crank rotational angle ranges θ2 and θ3, respectively, is equal to or greater than the threshold value αvs (step S46).

When the difference M3-M2 is equal to or greater than the threshold value αvs, the control unit 150 performs a calculation for estimating the pedaling force put on the bicycle 10 based on the average M3-M20 (step S47), calculates a motor drive command value based on the estimated pedaling force (step S48), and outputs a signal of the motor drive command value to the motor drive circuit 160 (step S49).

When the difference M3-M2 is less than the threshold value αvs, the control unit 150 determines whether or not the ratio (ω2/ω3) of an angular velocity level ω2 at the crank rotational angle θc = 0 degree to an angular velocity level ω3 at the crank rotational angle θc = 90 degrees is equal to or more than one (step S50). When the ratio (ω2/ω3) is equal to or greater than one; that is, when a pedaling force is not put on the pedal 30, the control routine returns to the standby state entry process (step S40).

When the ratio (ω2/ω3) is less than one; that is, when a pedaling force is put on the pedal 30, the control unit 150 determines whether or not the ratio (ω2/ω3) is less than a present threshold value ωs (step S51).

When the ratio (ω2/ω3) is less than the threshold value ωs, the control unit 150 performs a calculation for estimating the pedaling force put on the bicycle 10 based on the ratio (ω3/ω2) (step S52), calculates a motor drive command value based on the estimated pedaling force (step S48), and outputs a signal of the motor drive command value to the motor drive circuit 160 (step S49).

When the ratio (ω2/ω3) is equal to or greater than the threshold value ωs, the control unit 150 generates a motor drive command value of a predetermine fixed small value (step S53), and outputs a signal of the motor drive command value to the motor drive circuit 160 (step S49).

In either case, after the control unit 150 outputs to the motor drive circuit 160, the process returns to the step of determining whether or not the crankshaft 24 rotates in the normal direction (step S43), and the control unit 150 repeatedly performs the same steps to output a signal of the motor drive command value to the motor drive circuit 160 (steps S44 to S52).

In this way, the electric power assist device 50 drives the electric motor 58 based on motor drive command values. When the variation between the average values M3 and M2 of acceleration levels αv of the bicycle is equal to or greater than the threshold value αvs, the electric power assist device 50 provides an assist power appropriate for a pedaling force estimated from acceleration levels αv of the bicycle. When the variation between the average values M3 and M2 of acceleration levels αv of the bicycle is less than the threshold value αvs, the electric power assist device 50 provides an assist power appropriate for a pedaling force estimated from angular velocity levels ω.

### (Fourth Embodiment)

Next, a control system of an electric power assist device 50 according to a fourth embodiment of the present invention will be described. In the fourth embodiment, the control system shown in Figure 4 may be used.

The pedaling force estimator 152 operates in the same manner as the second embodiment. The pedaling force estimator 152 acquires information related to the crank rotational angle θc from the rotational angle sensor 130, information related to the crank rotational angle θc = 0 degree 24 from the pulse sensor 132, and information related to the acceleration level αv in the fore and aft direction of the bicycle 10 from the acceleration sensor 134. The pedaling force estimator 152 estimates the pedaling force of the bicycle 10 based on the variation between the average values M3 and M2 of acceleration levels αv within preset crank rotational angle ranges θ3 and θ2, respectively, where, for example, the preset crank rotational angle range θ3 is the range of θc from 60 to 120 degrees with respect to θc = 0 degree in the normal rotation, and the preset crank rotational angle range θ2 is the range of θc from 0 to 60 degrees with respect to θc = 0 degree in the normal rotation.

The variation between the average value M3 and the average value M2 is a difference (M3-M2) or a ratio (M3/M2). The pedaling force estimator 152 estimates a pedaling force such that the greater the difference (M3-M2) or the ratio (M3/M2) is, the greater the estimated pedaling force.

The estimation of pedaling force is made in the same manner as the second embodiment; that is, the estimation of pedaling force is made based on the variation between the average values M3 and M2 of the acceleration levels αv within the crank rotational angle ranges θ3 andθ2, respectively, where the crank rotational angle range θ3 includes the crank rotation angle θc = 90 degrees at which the acceleration level αv reaches its peak in one rotation of the crankshaft driven by pedaling, and the crank rotational angle range θ2 includes the crank rotation angle θc = 0 degree at which the acceleration level αv reaches its minimum in one rotation of the crankshaft driven by pedaling. Thus, more highly accurate and proper estimation of pedaling force can be made compared to the cases where the crank rotational angle ranges do not include the crank rotation angle θc = 90 degrees and θc = 0 degree or respective average values of acceleration levels in those ranges are not used.

In addition, this configuration, in which the estimation of pedaling force is made based on the variation between the average values M3 and M2, enables the estimation of pedaling force without significant influence of changes in acceleration of the bicycle 10 when it is traveling on a slope or steps.

The pedaling force estimator 152 further acquires information related to crank rotational angles θc from the rotational angle sensor 130. When the variation between the average values M3 and M2 of acceleration levels αv of the bicycle is small to the extent that makes it difficult for the pedaling force estimator 152 to estimate the pedaling force based on acceleration levels αv of the bicycle, the pedaling force estimator 152 calculates angular acceleration levels from second derivative values at crank rotational angles θc, and estimates the pedaling force of the bicycle 10 based on the variation (difference or ratio) between an angular acceleration level αc2 of the crankshaft 24 at the crank rotational angle θc = 0 degree and an angular acceleration n level αc3 of the crankshaft 24 at the crank rotational angle θc = 90 degrees.

In this case, the pedaling force estimator 152 estimates a pedaling force such that the greater the difference (αc3-αc2) or the ratio (αc3/αc2) between angular acceleration levels (αc2, αc3) is, the greater the estimated pedaling force.

The pedaling force estimator 152 may estimate a pedaling force based on the variation (difference or ratio) between the average values of angular acceleration levels within first and second crank rotational angle ranges, respectively, where, for example, the first crank rotational angle range θ2 is the range of θc from 0 to 60 degrees with respect to θc = 0 degree, and the second crank rotational angle range θ3 is the range of θc from 60 to 120 degrees with respect to θc = 0 degree.

In this way, when it is difficult for the pedaling force estimator 152 to estimate a pedaling force based on acceleration levels αv of the bicycle, this configuration can assist pedaling based on angular acceleration levels αc of the crankshaft 24. Thus, this configuration can provide a proper amount of power assist according to the pedaling force in various pedaling conditions.

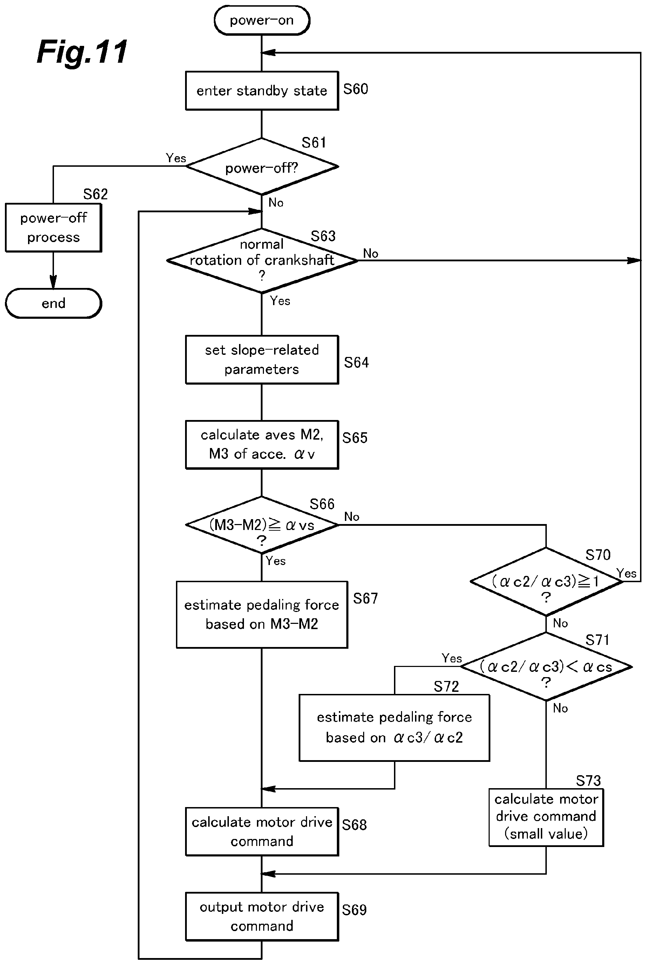

Next, a basic control routine of the control unit 150 according to the fourth embodiment will be described with reference to the flowchart shown in Figure 11.

This control routine is started when the electric power assist device 50 is powered on. First, the electric power assist device 50 performs a standby state entry process, causing the electric power assist device 50 to enter a standby state (step S60). The standby state entry process involves feeding power to the sensors 130, 132, 134, 136, and 138 to activate them, and stopping the electric motor 58.

Next, the control unit 150 determines whether or not the electric power assist device 50 is powered off (step S61). When the electric power assist device 50 is powered off, the control unit 150 performs a power-off process (step S62). The power-off process involves stopping the power supply to each of the sensors 130, 132, 134, 136 and 138.

When the electric power assist device 50 is not powered off, the control unit 150 determines whether or not the crankshaft 24 rotates in the normal direction based on signals from the rotational angle sensor 130 (step S46). When the crankshaft 24 does not rotate in the normal direction; that is, when a pedaling force is not put on the pedal 30, the control routine returns to the standby state entry process (step S60) so that the electric motor 58 is kept stopped so as not to assist the pedaling.

When the crankshaft 24 rotates in the normal direction; that is, when a pedaling force is put on the pedal 30, after one rotation of the crankshaft (step S64), the control unit 150 calculates average values M2 and M3 of acceleration levels αv within the crank rotational angle ranges θ2 and θ3, respectively, from signals from the acceleration sensor 134 (step S65).

Next, the control unit 150 determines whether or not the difference M3-M2 is equal to or greater than a present threshold value αvs; that is, whether or not the variation between the averages of acceleration levels αv of the bicycle within the crank rotational angle ranges θ2 and θ3, respectively, is equal to or greater than the threshold value αvs (step S66).

When the difference M3-M2 is equal to or greater than the threshold value αvs, the control unit 150 performs a calculation for estimating the pedaling force put on the bicycle 10 based on the average M3-M20 (step S67), calculates a motor drive command value based on the estimated pedaling force (step S68), and outputs a signal of the motor drive command value to the motor drive circuit 160 (step S69).

When the difference M3-M2 is less than the threshold value αvs, the control unit 150 determines whether or not the ratio (αc2/αc3) of an angular acceleration level αc2 at the crank rotational angle θc = 0 degree to an angular acceleration level αc3 at the crank rotational angle θc = 90 degrees is equal to or greater than one (step S70). When the ratio (αc2/αc3) is equal to or greater than one; that is, when a pedaling force is not put on the pedal 30, the control routine returns to the standby state entry process (step S60).

When the ratio (αc2/αc3) is less than one; that is, when a pedaling force is put on the pedal 30, the control unit 150 determines whether or not the ratio (αc2/αc3) is less than a present threshold value ωs (step S71).

When the ratio (αc2/αc3) is less than the threshold value αcs, the control unit 150 performs a calculation for estimating the pedaling force put on the bicycle 10 based on the ratio (αc3/αc2) (step S72), calculates a motor drive command value based on the estimated pedaling force (step S68), and outputs a signal of the motor drive command value to the motor drive circuit 160 (step S69).

When the ratio (αc2/αc3) is equal to or greater than the threshold value ωs, the control unit 150 generates a motor drive command value of a predetermine fixed small value (step S73), and outputs a signal of the motor drive command value to the motor drive circuit 160 (step S69).

In either case, after the control unit 150 outputs to the motor drive circuit 160, the process returns to the step of determining whether or not the crankshaft 24 rotates in the normal direction (step S63), and the control unit 150 repeatedly performs the same steps to output a signal of the motor drive command value to the motor drive circuit 160 (steps S64 to S73).

In this way, the electric power assist device 50 drives the electric motor 58 based on motor drive command values. When the variation between the average values M3 and M2 of acceleration levels αv of the bicycle is equal to or greater than the threshold value αvs, the electric power assist device 50 provides an assist power appropriate for a pedaling force estimated from acceleration levels αv of the bicycle. When the variation between the average values M3 and M2 of acceleration levels αv of the bicycle is less than the threshold value αvs, the electric power assist device 50 provides an assist power appropriate for a pedaling force estimated from angular acceleration levels αc.

The present invention has been described in terms of specific embodiments, but is not limited by such embodiments, and can be modified in various ways without departing from the scope of the present invention.

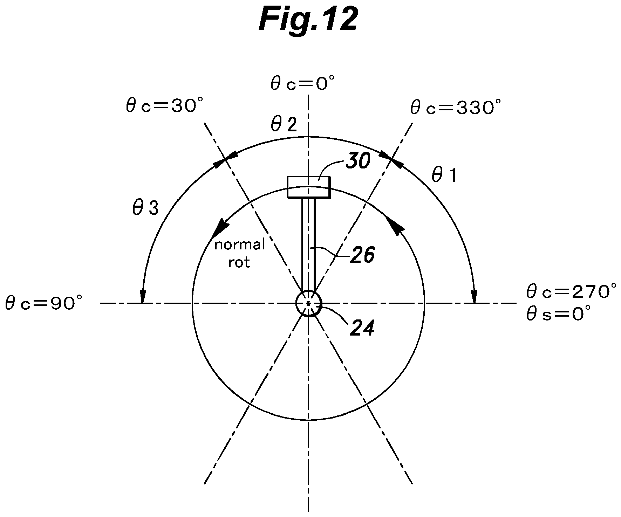

The preset crank rotational angle ranges θ2 and θ3 are not limited to the angle ranges shown in Figure 5. For example, the preset crank rotational angle ranges may be defined as shown in Figure 12; that is, the preset crank rotational angle ranges θ2 may be from 330 to 30 degrees in the normal rotation, and the preset crank rotational angle range θ3 may be from 30 to 90 degrees in the normal rotation.

In addition, all of the components shown in the above-described embodiments are not necessarily essential for the present invention, but can be appropriately omitted and substituted as long as such omission and substitution do not deviate from the gist of the present invention.

### GLOSSARY

- 10: bicycle
- 12: seat tube
- 13: tilt angle sensor
- 14: down tube
- 16: chain stay
- 18: frame structure
- 20: bearing tube
- 24: crankshaft
- 26: crankarm
- 26A: spline hole
- 27: crankarm mounting screw
- 28: crankarm
- 30: pedal
- 32: drive sprocket
- 50: electric power assist device
- 52: housing
- 54: ring portion
- 56: extension portion
- 58: electric motor
- 60: central opening
- 62: cylindrical portion
- 64: rotation output member
- 66: boss part
- 70: connecting mechanism
- 72: connecting main member
- 74: clamp member
- 75: bolt
- 76: bolt
- 78: screw member
- 80: bolt
- 81: through-hole
- 90: support mechanism
- 92: mount member
- 94: fastening band
- 96: rectangular frame structure part
- 98: support base member
- 100: rectangular plate-shaped part
- 102: depending piece
- 103: through-hole
- 104: support member
- 106: fixed bush
- 108: female screw
- 109: male screw
- 110: movable bush
- 112: flange part
- 114: fastening bolt
- 120: battery
- 130: rotational angle sensor (rotational angle detection device)
- 132: pulse sensor
- 134: acceleration sensor (acceleration detection device)
- 136: tilt angle sensor (tilt angle detection device)
- 138: voltage sensor
- 140: current sensor
- 150: control unit
- 152: pedaling force estimator
- 154: crank rotational direction determiner
- 156: pedaling force presence determiner
- 158: motor drive controller
- 160: motor drive circuit

## Claims

1. An electric power-assist device for bicycles, wherein a bicycle is provided with a crankshaft configured to be driven by a pedaling force transmitted from a pedal via a crankarm, the electric power-assist device comprising:
an electric motor connected to the crankshaft or the crankarm of the bicycle in a torque transmitting relationship;
a rotation angle detection device configured to detect a crank rotational angle of the crankshaft;
an acceleration detection device configured to detect an acceleration level in a fore and aft direction of the bicycle; and
a control unit configured to control the electric motor,
wherein the control unit comprises:
a pedaling force estimator configured to estimate a pedaling force put on each pedal of the bicycle based on an acceleration level measured at a predetermined crank rotational angle; and
a motor drive controller configured to control the electric motor based on the pedaling force estimated by the pedaling force estimator.

2. The electric power assist device according to claim 1, wherein the pedaling force estimator estimates the pedaling force based on an average of acceleration levels measured within a rotation angle range which includes the predetermined crank rotational angle.

3. The electric power assist device according to claim 1 or 2, wherein the predetermined crank rotational angle comprises an angular position of 90 degrees from the top dead center of the pedal.

4. The electric power assist device according to claim 1, wherein the pedaling force estimator estimates the pedaling force based on a variation between first and second acceleration levels measured at different first and second crank rotational angles, respectively.

5. The electric power assist device according to claim 4, wherein the pedaling force estimator estimates the pedaling force based on a variation between first and second averages of acceleration levels measured within different first and second rotation angle ranges, respectively, and wherein the first and second rotation angle ranges include the first and second crank rotational angles, respectively.

6. The electric power assist device according to claim 4 or 5, further comprising a current sensor for detecting and measuring currents in the electric motor,
wherein, when the variation between the first and second acceleration levels is equal to or greater than a predetermined value, the pedaling force estimator estimates the pedaling force based on the variation between the first and second acceleration levels or the variation between the first and second averages of acceleration levels, and
wherein, when the variation between the first and second acceleration levels is lower than the predetermined value, the pedaling force estimator estimates the pedaling force based on a variation between first and second current levels measured at the first and second crank rotational angles, respectively.

7. The electric power assist device according to claim 6, wherein the pedaling force estimator estimates the pedaling force based on a variation between first and second averages of current levels measured within the first and second rotation angle ranges, respectively.

8. The electric power assist device according to claim 4 or 5, wherein the pedaling force estimator calculates angular velocity levels of the crankshaft from crank rotational angles,
wherein, when the variation between the first and second acceleration levels or the variation between the first and second averages of acceleration levels is equal to or greater than a predetermined value, the pedaling force estimator estimates the pedaling force based on the variation between the first and second acceleration levels, and
wherein, when the variation between the first and second acceleration levels or the variation between the first and second averages of acceleration levels is lower than the predetermined value, the pedaling force estimator estimates the pedaling force based on a variation between first and second angular velocity levels acquired at the first and second crank rotational angles, respectively.

9. The electric power assist device according to claim 8, wherein the pedaling force estimator estimates the pedaling force based on a variation between first and second averages of angular velocity levels acquired within the first and second rotation angle ranges, respectively.

10. The electric power assist device according to claim 4 or 5, wherein the pedaling force estimator calculates angular acceleration levels of the crankshaft from crank rotational angles,
wherein, when the variation between the first and second acceleration levels is equal to or greater than a predetermined value, the pedaling force estimator estimates the pedaling force based on the variation between the first and second acceleration levels or the variation between the first and second averages of acceleration levels, and
wherein, when the variation between the first and second acceleration levels or the variation between the first and second averages of acceleration levels is lower than the predetermined value, the pedaling force estimator estimates the pedaling force based on a variation between first and second angular acceleration levels acquired at the first and second crank rotational angles, respectively.

11. The electric power assist device according to claim 10, wherein the pedaling force estimator estimates the pedaling force based on a variation between first and second averages of angular acceleration levels acquired within the first and second rotation angle ranges, respectively.

12. The electric power assist device according to any one of claims 5, 7, 9 and 11, wherein one of the first and second crank rotational angles comprises an angular position of the top dead center of the pedal, and the other comprises an angular position of 90 degrees from the top dead center of the pedal.

13. The electric power assist device according to claim 1 or 2, further comprises a tilt angle detection device configured to detect tilt angles of the bicycle with respect to the direction of gravity,
wherein the pedaling force estimator corrects the estimated pedaling force according to the tilt angle.

14. A bicycle fitted with the electric power assist device according to any one of claims 1 to 13.
